# EUROPÄISCHE PATENTANMELDUNG

(11) **EP 4 588 365 A1**
(43) Veröffentlichungstag der Anmeldung: **23.07.2025**
(21) Anmeldenummer: 25150160.7
(22) Anmeldetag: 03.01.2025
(51) Int. Cl.: A23N 1/00, A23N 1/02, A47J 19/02

(54) **FRUCHTPRESSE**

(30) Priorität: 18.01.2024 AT 500302024
(71) Anmelder: Citrocasa GmbH, 4020 Linz (AT)
(72) Erfinder: Huber, Johannes, 4225 Luftenberg (AT)
(74) Vertreter: Hübscher & Partner Patentanwälte GmbH

(57) **Zusammenfassung**

Es wird eine Fruchtpresse für Schalenfrüchte mit zwei beidseits eines Messers (8) angeordneten, gegensinnig antreibbaren, über den Umfang verteilte Pressausnehmungen (6) bildenden Presswalzen (2) und mit zwei unterhalb der Presswalzen (2) vorgesehenen, gegensinnig zu den Presswalzen (2) antreibbaren Stempelköpfen (3) beschrieben, die über den Umfang verteilte, mit den Pressausnehmungen (6) der Presswalzen (2) zusammenwirkende Pressstempel (7) tragen. Um eine Anpassung an größere Nenndurchmesser der Schalenfrüchte zu erreichen, wird vorgeschlagen, dass die Pressausnehmungen (6) in einer zur Drehachse ihrer Presswalze (2) senkrechten Mittelebene (10) einen Mittenquerschnitt in Form eines Kreissektors mit einem gerundeten Scheitelbereich (11) zwischen den beiden den Kreissektor begrenzenden Radialen (12) und die Pressstempel (7) der Stempelköpfe (3) in einer zur Drehachse der Stempelköpfe (3) parallelen Projektion eine dem Mittenquerschnitt der Pressausnehmungen (6) in einem Abstand folgende Kontur aufweisen.

## Beschreibung

Die Erfindung bezieht sich auf eine Fruchtpresse für Schalenfrüchte mit zwei beidseits eines Messers angeordneten, gegensinnig antreibbaren, über den Umfang verteilte Pressausnehmungen bildenden Presswalzen und mit zwei unterhalb der Presswalzen vorgesehenen, gegensinnig zu den Presswalzen antreibbaren Stempelköpfen, die über den Umfang verteilte, mit den Pressausnehmungen der Presswalzen zusammenwirkende Pressstempel tragen.

Bei bekannten Fruchtpressen dieser Art (US 5 170 699 A, WO 2004/052126 A1) werden die auszupressenden Schalenfrüchte, insbesondere Orangen, in den Zwickelbereich zwischen den Presswalzen gefördert, wo sie mit Hilfe eines von unten zwischen die Presswalzen eingreifenden Messers halbiert werden, um die Fruchthälften in halbkugelförmigen Pressausnehmungen der Presswalzen aufzunehmen. Die mit den Presswalzen zusammenwirkenden, unterhalb der Presswalzen angeordneten Stempelköpfe weisen kugelförmige Pressstempel auf, die beim Antrieb der Presswalzen und Stempelköpfe in die Pressausnehmungen der Presswalzen eingreifen und dabei die Fruchthälften auspressen. Die Durchmesser der üblicherweise vier halbkugelförmigen Pressausnehmungen bestimmen einerseits den Durchmesser der Presswalzen und anderseits den maximalen Nenndurchmesser der auszupressenden Schalenfrüchte. Um größere Schalenfrüchte auspressen zu können, sind daher größere Presswalzen und damit eine angepasste Baugröße der Fruchtpresse erforderlich.

Zur Verringerung der Baugröße ist es bekannt (AT 508 946 A1), die Wellen der Presswalzen einerseits und der dazugehörigen, je zwei diametral einander gegenüberliegende Pressstempel aufweisenden Stempelköpfe anderseits in gemeinsamen, parallelen Axialebenen anzuordnen, was jedoch nicht hilft, den Durchmesserbereich der mit der Fruchtpresse auspressbaren Schalenfrüchte zu vergrößern.

Um Zitrusfrüchte in einem größeren Durchmesserbereich auspressen zu können, wurde bereits vorgeschlagen (AT 521 141 A1), zwei Presseinheiten mit unterschiedlichen Durchmessern der Pressausnehmungen und der mit den Pressausnehmungen zusammenwirkenden Pressstempel auf gemeinsamen Wellen vorzusehen und diesen beiden Presseinheiten eine Sortiereinrichtung für die Zitrusfrüchte vorzulagern, sodass die Zitrusfrüchte nach Größe sortiert den beiden Presseinheiten zugeleitet werden. Nachteilig ist allerdings der durch die beiden Presseinheiten und die Sortiereinrichtung vergrößerte Konstruktionsaufwand.

Bei Fruchtpressen, bei denen die die Fruchthälften in Pressausnehmungen aufnehmenden Presswerkzeuge in vertikaler Richtung auf ortsfest gelagerte Pressstempel aufgedrückt werden, ist es zur Anpassung an unterschiedliche Pressfrüchte bekannt (US 2022175010 A1), die Presswerkzeuge und Pressstempel auszutauschen und die Anpassung des mit dem Werkzeugwechsel verbundenen Presshubs durch eine entsprechende Ansteuerung eins für den Presshub gesondert vorgesehenen Motors zu bewerkstelligen.

Schließlich ist es bekannt (CN 106490952 A), durch eine Änderung des Abstands zwischen den Wellen für die Presswalzen mit den Pressausnehmungen einerseits und den Wellen für die Pressstempel anderseits den Spalt zwischen den Pressausnehmungen und den in die Pressausnehmungen eingreifenden Pressstempeln an die Schalendicke anzupassen, was nicht nur mit einem zusätzlichen Konstruktionsaufwand für die Abstandsänderung er Wellen verbunden ist, sondern auch die Handhabung schwierig macht, weil der Wellenabstand jeweils in Abhängigkeit von der Schalendicke eingestellt werden muss.

Der Erfindung liegt somit die Aufgabe zugrunde, eine Fruchtpresse zu schaffen, mit deren Hilfe die maximale Nenngröße der auszupressenden Schalenfrüchte gesteigert werden kann, ohne die Baugröße der Fruchtpresse ändern zu müssen.

Ausgehend von einer Fruchtpresse der eingangs geschilderten Art löst die Erfindung die gestellte Aufgabe dadurch, dass die Pressausnehmungen in einer zur Drehachse ihrer Presswalze senkrechten Mittelebene einen Mittenquerschnitt in Form eines Kreissektors mit einem gerundeten Scheitelbereich zwischen den beiden den Kreissektor begrenzenden Radien und die Pressstempel der Stempelköpfe in einer zur Drehachse der Stempelköpfe parallelen Projektion eine dem Mittenquerschnitt der Pressausnehmungen in einem Abstand folgende Kontur aufweisen.

Zufolge dieser Maßnahme werden die Umfangslänge des Mittenquerschnitts der Pressausnehmungen und damit wegen des stetigen Verlaufs der Oberfläche der Pressausnehmungen auch die Umfangslängen der zum Mittenquerschnitt parallelen Querschnitte der Pressausnehmungen im Vergleich mit entsprechenden Querschnitten halbkugelförmiger Pressausnehmungen mit gleicher durch die Öffnungsweite bestimmten Grundfläche größer. Wegen der somit gegenüber halbkugelförmigen Pressausnehmungen größeren Oberfläche können Presswalzen mit erfindungsgemäßen Pressausnehmungen größere Schalenfrüchte aufnehmen, ohne die Größe der Presswalzen verändern zu müssen. Mit der Anpassung der Pressstempel der Stempelköpfe an die Form der Pressausnehmungen folgt die Oberfläche der Stempelköpfe der Oberfläche der Pressausnehmungen in einem von einer vorgegebenen Nennschalendicke der Schalenfrüchte abhängigen Abstand als Voraussetzung für eine gute Entsaftung der Schalenfrüchte.

Da die vorgeschlagene Maßnahme, den Querschnitt der Pressausnehmungen senkrecht zur Drehachse der Presswalze gegenüber einer Kreisform abzuändern, unabhängig von der durch die Öffnungsweite der Pressausnehmungen bestimmten Grundfläche der Pressausnehmungen ist, können zum Unterschied zu üblichen kreisförmigen Grundflächen die Grundflächen der Pressausnehmungen nach der Erfindung in Richtung der Achsen der Presswalze einen größeren Durchmesser als quer dazu aufweisen, wodurch die Oberfläche der Pressausnehmungen zusätzlich vergrößert werden kann, ohne die Presswalzen insbesondere hinsichtlich ihres Durchmessers vergrößern zu müssen.

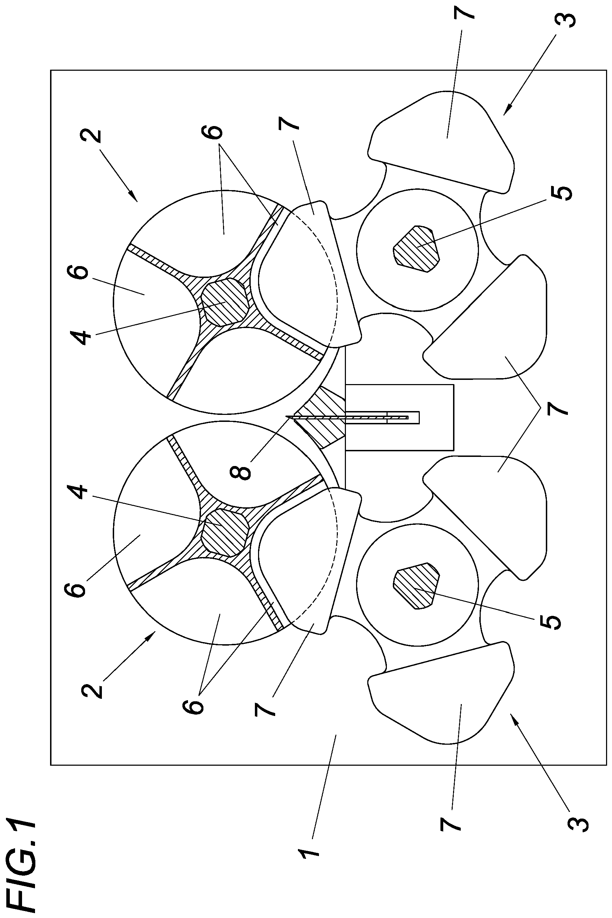

In der Zeichnung ist der Erfindungsgegenstand beispielsweise dargestellt. Es zeigen
- Fig. 1: eine erfindungsgemäße Fruchtpresse ausschnittsweise im Bereich der miteinander zusammenwirkenden Presswalzen und Stempelköpfe in einem schematischen Schnitt senkrecht zu den Drehachsen der Presswalzen und Stem pelköpfe,
- Fig. 2: eine Presswalze und einen mit der Presswalze zusammenwirkenden Stempelkopf in einer Eingriffsstellung in einem größeren Maßstab und
- Fig. 3: einen Schnitt nach der Linie III-III der Fig. 2.

Eine erfindungsgemäße Fruchtpresse weist in herkömmlicher Weise ein Gestell 1 auf, in dem zwei Presswalzen 2 und unterhalb dieser Presswalzen 2 zwei mit den Presswalzen 2 zusammenwirkende Stempelköpfe 3 auf parallelen Wellen 4 und 5 gelagert sind. Die Presswalzen 2 sind mit Pressausnehmungen 6 versehen, die mit Pressstempeln 7 der Stempelköpfe 3 zusammenwirken. Im Zwickelbereich zwischen den Presswalzen 2 ist ein Messer angeordnet, das mithilfe von den Stempelköpfen 3 zugeordneten, aus Übersichtlichkeitsgründen nicht dargestellten Mitnehmernocken für den Schnitthub beaufschlagt wird. Die auszupressenden Schalenfrüchte, insbesondere Orangen, werden über einen nicht eingezeichneten Beschickungskanal von oben in den Zwickelbereich zwischen den Presswalzen 2 gefördert und von den Pressausnehmungen 6 der Presswalzen 2 aufgenommen, um entgegen dem über die Mitnehmernocken angehobenen Messer 8 nach unten gefördert zu werden. Da beim Weiterdrehen der Presswalzen 2 die Pressstempel 7 der Stempelköpfe 3 in die Pressausnehmungen 6 eindringen, werden die von den Pressausnehmungen 6 aufgenommenen Fruchthälften durch die Pressstempel 7 ausgepresst. Die verbleibenden Schalenhälften mit den Fruchtresten bleiben an den Pressstempeln 7 haften und werden mit den Pressstempeln 7 aus den Pressausnehmungen 6 der Presswalzen 2 ausgetragen und anschließend von den Pressstempeln 7 abgestreift.

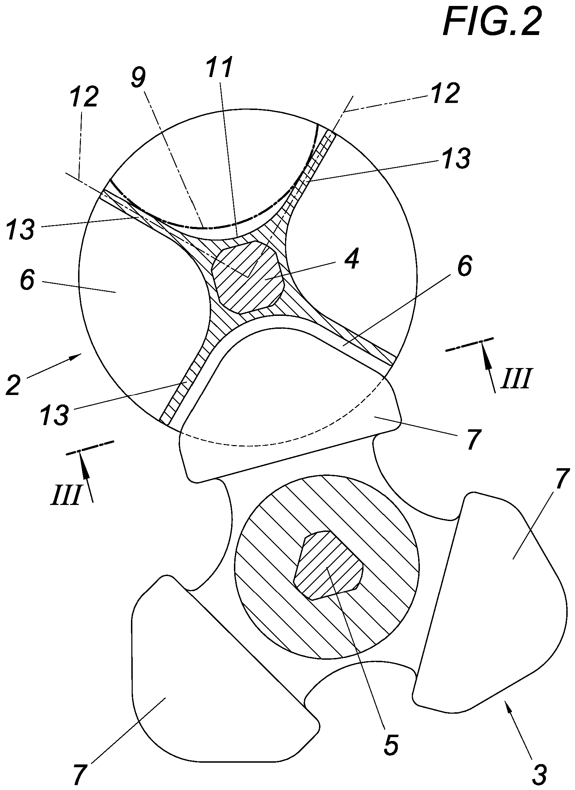

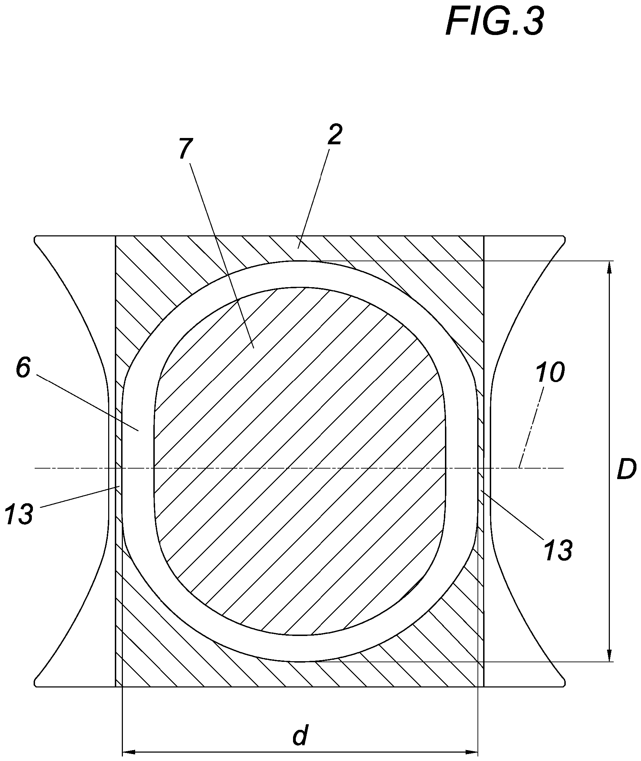

Wie in der schematischen Darstellung nach der Fig. 2 ersichtlich wird, weisen die erfindungsgemäßen Presswalzen 2 zum Unterschied zu Presswalzen mit üblichen, halbkugelförmigen, strichpunktiert angedeuteten Pressausnehmungen 9 Pressausnehmungen 6 auf, die in einer zur Drehachse der Presswalze 2 senkrechten, in der Fig. 3 mit 10 bezeichneten Mittelebene einen Mittenquerschnitt in Form eines Kreissektors mit einem gerundeten Scheitelbereich 11 zwischen den beiden den Kreissektor begrenzenden Radialen 12 aufweisen, sodass die radialen Trennwände 13 zwischen den Pressausnehmungen 6 im Bereich der Mittelebene 10 bis zum gerundeten Scheitelbereich 11 gleichmäßig dick sind.

Durch einen Vergleich der Mittenquerschnitte einer erfindungsgemäßen Pressausnehmung 6 und einer herkömmlichen, halbkugelförmigen Pressausnehmung 9 ergibt sich aus der Fig. 2 unmittelbar, dass der Mittenquerschnitt der erfindungsgemäßen Pressausnehmung 6 eine größere Umfangslänge als der Mittenquerschnitt einer halbkugelförmigen Pressausnehmung 9 hat. Aufgrund des notwendigerweise stetigen Verlaufs der Oberfläche der Pressausnehmungen 6 auch in Richtung der Achse der Presswalze 2 folgt auch für zur Mittelebene parallelen Querschnitten eine größere Umfangslänge, sodass wegen der größeren Oberfläche und damit eihergehend des größeren Rauminhalts der Pressausnehmungen 6 erfindungsgemäße Presswalzen 2 Schalenfrüchte mit einem größeren Nenndurchmesser als herkömmliche Presswalzen aufnehmen können.

Da die Pressstempel 7 der Stempelköpfe 3 in einer zur Drehachse der Stempelköpfe 3 parallelen Projektion eine dem Mittenquerschnitt der Pressausnehmungen 6 in einem Abstand folgende Kontur aufweisen, wie dies die Fig. 2 veranschaulicht, und auch im übrigen Bereich eine Oberflächenform haben, die der Oberfläche der Pressausnehmungen 6 in einem vorgegebenen Abstand folgt, ergeben sich bewährte Entsaftungsbedingungen.

Um die Oberfläche und den Rauminhalt der Pressausnehmungen 6 zusätzlich vergrößern zu können, können sie in Richtung der Achse der Presswalze 2 erweitert werden, sodass die durch die Öffnung der Pressausnehmungen 6 gebildete Grundflächen der Pressausnehmungen 6 gemäß der Fig. 3 in Richtung der Walzenachse einen größeren Durchmesser D als der quer dazu verlaufende Durchmesser d aufweisen. Die dementsprechend angepassten Pressstempel 7 sind daher mit einer Basis versehen, deren Grundfläche wiederum einen in Richtung der Drehachse des Stempelkopfs 3 größeren Durchmesser als quer dazu besitzt.

## Patentansprüche

1. Fruchtpresse für Schalenfrüchte mit zwei beidseits eines Messers (8) angeordneten, gegensinnig antreibbaren, über den Umfang verteilte Pressausnehmungen (6) bildenden Presswalzen (2) und mit zwei unterhalb der Presswalzen (2) vorgesehenen, gegensinnig zu den Presswalzen (2) antreibbaren Stempelköpfen (3), die über den Umfang verteilte, mit den Pressausnehmungen (6) der Presswalzen (2) zusammenwirkende Pressstempel (7) tragen, **dadurch gekennzeichnet, dass** die Pressausnehmungen (6) in einer zur Drehachse ihrer Presswalze (2) senkrechten Mittelebene (10) einen Mittenquerschnitt in Form eines Kreissektors mit einem gerundeten Scheitelbereich (11) zwischen den beiden den Kreissektor begrenzenden Radialen (12) und die Pressstempel (7) der Stempelköpfe (3) in einer zur Drehachse der Stempelköpfe (3) parallelen Projektion eine dem Mittenquerschnitt der Pressausnehmungen (6) in einem Abstand folgende Kontur aufweisen.

2. Fruchtpresse nach Anspruch 1, **dadurch gekennzeichnet, dass** die einerseits durch die Öffnung der Pressausnehmungen (6) und anderseits durch die Basis der Pressstempel (7) gebildeten Grundflächen der Pressausnehmungen (6) und der Pressstempel (7) in Richtung der Drehachsen einen größeren Durchmesser (D) als quer dazu aufweisen.
